(19) **Europäisches Patentamt**
**European Patent Office**
**Office européen des brevets**

(11) **EP 4 518 241 A1**

(12) **EUROPEAN PATENT APPLICATION**
published in accordance with Art. 153(4) EPC

(43) Date of publication:
**05.03.2025 Bulletin 2025/10**

(21) Application number: **22939831.8**

(22) Date of filing: **01.11.2022**

(51) International Patent Classification (IPC):
**H04L 9/08** (2006.01)

(52) Cooperative Patent Classification (CPC):
**Y04S 40/20**

(86) International application number:
**PCT/CN2022/129032**

(87) International publication number:
**WO 2023/207014 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.04.2022 CN 202210458356**

(71) Applicant: **Shrong Energy Technology Co., Ltd.
Beijing 100010 (CN)**

(72) Inventor: **ZHANG, Wurong
Beijing 100010 (CN)**

(74) Representative: **Michalski Hüttermann & Partner
Patentanwälte mbB
Kaistraße 16A
40221 Düsseldorf (DE)**

(54) **ENCRYPTION METHOD AND APPARATUS, DECRYPTION METHOD AND APPARATUS, AND MEDIUM**

(57) The present disclosure relates to a one-time-pad encryption method and apparatus, a one-time-pad decryption method and apparatus, and a medium. The encryption method is applied to a sending end, and includes: selecting a first key from a set of initial keys according to a first preset rule; encrypting an encryption key on a basis of the first key to obtain a key ciphertext, where the encryption key is used for encrypting data to be transmitted; sending the key ciphertext to a receiving end; and encrypting the data to be transmitted by using the encryption key, and sending an encrypted data ciphertext to the receiving end. Every time encrypted data is sent to the receiving end, a different encryption key is used to perform encryption, and the encryption key is encrypted on a basis of the first key, where the first key is selected from the set of initial keys according to the first preset rule, such that the security of key transmission is ensured. In this way, even if the used encryption key is cracked, because the first key is selected from the set of initial keys according to the first preset rule, the security of the encryption key used subsequently can be ensured, and the security of an encryption system against technical cracking and against key leakage is improved.

| | |
|---|---|
| Select a first key from a set of initial keys according to a first preset rule | S41 |
| Encrypt an encryption key on a basis of the first key to obtain a key ciphertext, where the encryption key is used for encrypting data to be transmitted | S42 |
| Send the key ciphertext to a receiving end | S43 |
| Encrypt the data to be transmitted by using the encryption key, and send an encrypted data ciphertext to the receiving end | S44 |

FIG. 4

EP 4 518 241 A1

## Description

The present disclosure claims the priority to Chinese Patent Application No. 202210458356.4, filed with the China National Intellectual Property Administration on April 28, 2022, and entitled "ENCRYPTION METHOD AND APPARATUS, DECRYPTION METHOD AND APPARATUS, AND MEDIUM", which is incorporated herein by reference in its entirety.

## Technical Field

The present disclosure relates to, but is not limited to, encryption method and apparatus, decryption method and apparatus, and medium.

## Background

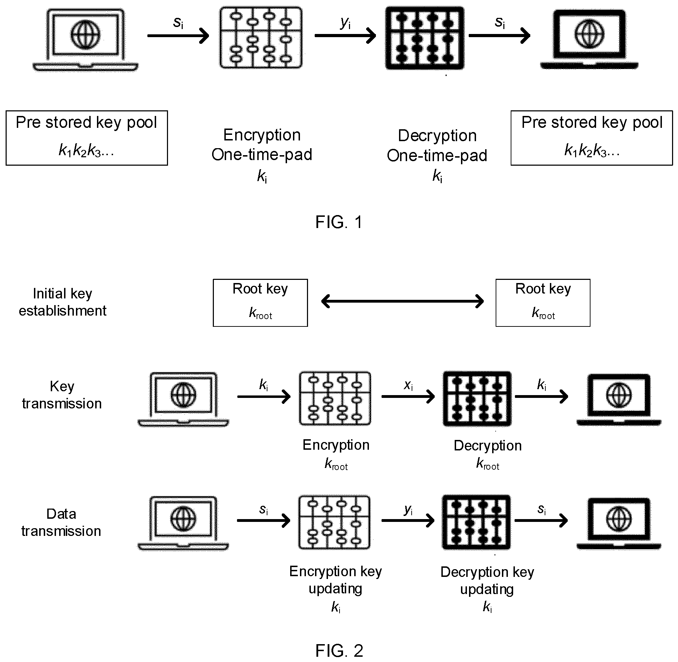

In related art, the one-time-pad security system requires that the amount of information carried by the key is equal to the amount of information of the plaintext. FIG. 1 is a schematic diagram of an encryption system that achieves one-time-pad by prestoring a large number of keys. Referring to FIG. 1, this encryption method requires an infinite number of keys, which means that the consumption of keys is equal to the consumption of plaintext, and therefore the method cannot be achieved in practical applications. If a large number of keys are prestored in both the sending end and the receiving end, the confidentiality of the system disappears when the keys are exhausted. Especially in practical applications where the communication rate is relatively high and the data volume is relatively large, it is impossible to store keys whose amount is equal to the amount of communication data. Even if keys are periodically updated, the distribution, reliable storage, and reliable update of the large number of keys not only cause huge management costs, but also cause a huge risk of key leakage.

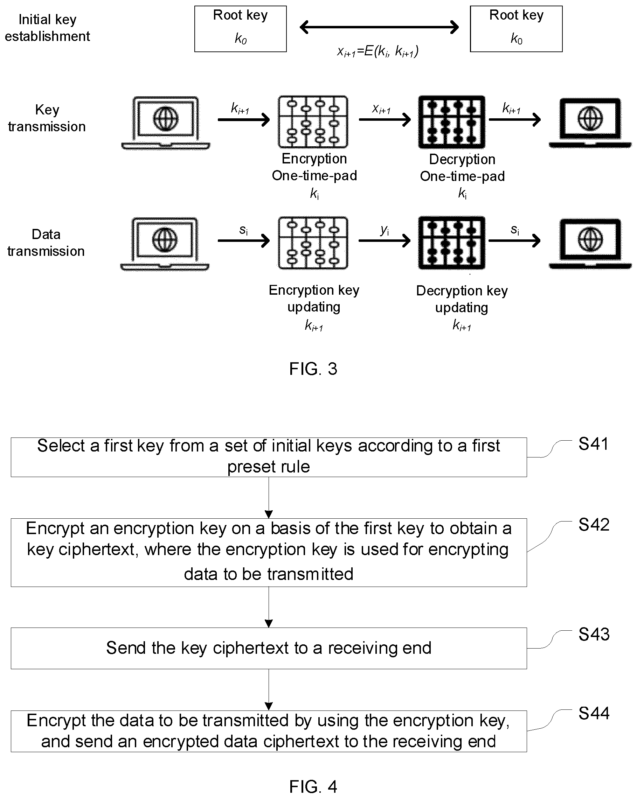

A key updatable cryptosystem includes three parts: initial key establishment, key transmission, and data transmission. A key transmission module updates a key by reasonably using the initial keys. A data transmission module encrypts data by using the key obtained from the key transmission module and transmits the encrypted data. Security assessment should also include three parts: initial key establishment, key transmission, and data transmission. In practical system, the security of the entire system depends on the security of the key transmission. In related art, periodically updating of the session key by using the root key is a typical and commonly used method of key updating. FIG. 2 is a schematic diagram of a system that updates the session key by using the root key. As shown in FIG. 2, the session key can be frequently updated where even one-time-pad can be achieved during data transmission, and the security of data transmission seems to be high. However, due to the use of a fixed root key for encryption during key transmission, if the root key is leaked or cracked, the security of the entire system is completely lost. Another common way to update key is to design a key update channel in the business channel, which is equivalent to updating a further key by using the current key. FIG. 3 is a schematic diagram of a dynamic key updating system. As shown in FIG. 3, in this scheme, an initial key $k_0$ needs to be prestored in both the sending end and the receiving end. The function of the initial key $k_0$ is similar to the function of the root key in FIG. 2, except that the initial key $k_0$ is used only once. The key transmission and the data transmission in this scheme are both one-time-pad, thus the ability against technical cracking is improved. However, there may be a risk in this scheme: if there is a key leak in the system, the security of the entire cryptosystem is lost. For example, if $k_i$ is leaked, the next key is easily cracked through $k_{i+1}=D(x_{i+1}, k_i)$ by the thief who will immediately obtain the updated key, thereby losing the effect of dynamically updating the key.

## Summary

In order to overcome the problems in related art, the present disclosure provides an encryption method and an encryption apparatus, a decryption method and a decryption apparatus, and a medium.

According to a first aspect of the present disclosure, an encryption method is provided. The encryption method is applied to a sending end, and includes:

> selecting a first key from a set of initial keys according to a first preset rule;
> encrypting an encryption key on a basis of the first key to obtain a key ciphertext, where the encryption key is used for encrypting data to be transmitted;
> sending the key ciphertext to a receiving end; and
> encrypting the data to be transmitted by using the encryption key, and sending an encrypted data ciphertext to the receiving end.

In some exemplary embodiments of the present disclosure, the encryption method further includes: selecting a second key according to a second preset rule.

The encrypting an encryption key on a basis of the first key to obtain a key ciphertext includes: encrypting the encryption key by using the first key and the second key, to obtain the key ciphertext.

In some exemplary embodiments of the present disclosure, where the encrypting the encryption key by using the first key and the second key to obtain the key ciphertext includes:

> encrypting the encryption key according to the first key by using a first encryption algorithm to obtain a first key ciphertext; and
> encrypting the first key ciphertext according to the second key by using a second encryption algorithm to obtain the key ciphertext.

In some exemplary embodiments of the present disclosure, where selecting a second key according to a second preset rule includes:

selecting the second key from the set of initial keys according to the second preset rule; or
selecting an encryption key used in a previous data transmission as the second key.

In some exemplary embodiments of the present disclosure, the encryption key is a quantum true random number.

In some exemplary embodiments of the present disclosure, the encryption method further includes: updating the set of initial keys according to a third preset rule.

In some exemplary embodiments of the present disclosure, an encryption operation of encrypting the encryption key is an exclusive-or operation.

According to a second aspect of the present disclosure, a decryption method is provided. The decryption method is applied to a receiving end, and includes:

receiving a key ciphertext;
selecting a third key from a set of initial keys according to a first preset rule, decrypting the key ciphertext on a basis of the third key to obtain an encryption key; and
receiving a data ciphertext, decrypting the data ciphertext by using the encryption key to obtain data transmitted by a sending end.

In some exemplary embodiments of the present disclosure, the decryption method further includes: selecting a fourth key according to a second preset rule.

The decrypting the key ciphertext on a basis of the third key to obtain an encryption key includes: decrypting the key ciphertext by using the third key and the fourth key to obtain the encryption key.

In some exemplary embodiments of the present disclosure, decrypting the key ciphertext by using the third key and a fourth key to obtain the encryption key includes:

decrypting the key ciphertext by using the fourth key to obtain a first key ciphertext; and
decrypting the first key ciphertext by using the third key to obtain the encryption key.

According to a third aspect of the present disclosure, an encryption apparatus is provided. The encryption apparatus is applied to a sending end, and includes:

a first selecting module, configured to select a first key from a set of initial keys according to a first preset rule;
an encrypting module, configured to encrypt an encryption key on a basis of the first key to obtain a key ciphertext, and further configured to encrypt data to be transmitted by using the encryption key; and
a sending module, configured to send the key ciphertext to a receiving end, and further configured to send an encrypted data ciphertext to the receiving end.

According to a fourth aspect of the present disclosure, a decryption apparatus is provided. The decryption apparatus is applied to a receiving end, and includes:

a receiving module, configured to receive a key ciphertext and a data ciphertext;
a second selecting module, configured to select a third key from a set of initial keys according to a first preset rule; and
a decrypting module, configured to decrypt the key ciphertext on a basis of the third key to obtain an encryption key, and further configured to decrypt the data ciphertext by using the encryption key.

According to a fifth aspect of the present disclosure, an encryption apparatus is provided. The encryption apparatus includes:

a processor; and
a memory configured to store instructions executable by the processor; where
the processor is configured to perform any one of the aforementioned encryption methods.

According to a sixth aspect of the present disclosure, a decryption apparatus is provided. The decryption apparatus includes:

a processor; and
a memory configured to store instructions executable by the processor; where
the processor is configured to perform any one of the aforementioned decryption methods.

According to a seventh aspect of the present disclosure, a computer-readable storage medium is provided. The compute-readable storage medium stores a computer program. When executed, the computer program implements any one of the aforementioned encryption methods, or any one of the aforementioned decryption methods.

In the present disclosure, the sending end selects the first key from the set of initial keys according to the first preset rule, encrypts the encryption key on a basis of the first key to obtain the key ciphertext, sends the key ciphertext to the receiving end, encrypts the data to be transmitted by using the encryption key, and sends the encrypted data ciphertext to the receiving end. Every time encrypted data is sent to the receiving end, a different encryption key is used to perform encryption, and the encryption key is encrypted on a basis of the first key, where the first key is selected from the set of initial keys according to the first preset rule, such that the security of key transmission is ensured. In this way, even if the used encryption key is cracked, because the first key is selected from the set of initial keys according to the first preset rule, the security of the encryption key used subsequently can be ensured, and the security of an encryption system against technical cracking and against key leakage is improved.

It should be understood that, the aforementioned general description and detailed description hereinafter are merely exemplary and explanatory, and the present disclosure is not limited thereto.

**Brief Description of the Drawings**

The drawings incorporated into the specification and constituting part of the specification illustrate the embodiments of the present disclosure, and are used together with the specification to explain the principles of the present disclosure.

FIG. 1 is a schematic diagram of an encryption system that achieves one-time-pad by prestoring a large number of keys.
FIG. 2 is a schematic diagram of a system that updates a session key by using a root key.
FIG. 3 is a schematic diagram of a dynamic key updating system.
FIG. 4 is a flowchart of an encryption method according to an exemplary embodiment.
FIG. 5 is a schematic diagram of an encryption system according to an exemplary embodiment.
FIG. 6 is a schematic diagram of a real-time encryption system using quantum random numbers according to an exemplary embodiment.
FIG. 7 is a flowchart of a decryption method according to an exemplary embodiment.
FIG. 8 is a block diagram of an encryption apparatus according to an exemplary embodiment.
FIG. 9 is a block diagram of a decryption apparatus according to an exemplary embodiment.
FIG. 10 is a block diagram of a computer device for encrypting and decrypting according to an exemplary embodiment.

**Detailed Description**

To make the objectives, technical solutions, and advantages of the embodiments of the present disclosure clearer, the following clearly and completely describes the technical solutions in the embodiments of the present disclosure with reference to the accompanying drawings in the embodiments of the present disclosure. Apparently, the described embodiments are some but not all of the embodiments of the present disclosure.

All other embodiments obtained by those skilled in the art on a basis of the embodiments of the present disclosure without creative efforts should fall within the protection scope of the present disclosure. It should be noted that the embodiments in the present disclosure and features in the embodiments may be combined with each other in a non-conflicting manner.

To improve the security of the encryption system, the present disclosure provides an encryption method. FIG. 4 is a flowchart of an encryption method according to an exemplary embodiment. Referring to FIG. 4, the encryption method is applied to a sending end, and includes:

Step S41: A first key is selected from a set of initial keys according to a first preset rule.

The set of initial keys is preestablished in the sending end and a receiving end. The set of initial keys includes M initial keys, and is represented by $\{K_m\}$, where M is a positive integer greater than or equal to 2.

In an exemplary embodiment, the M initial keys of the set of initial keys may be prestored symmetric key groups. The pre stored symmetric key groups are established in the sending end and the receiving end through prestoring.

In an exemplary embodiment, the M initial keys of the set of initial keys may be initial key groups established through an asymmetric public encryption key system. For example, the receiving end encrypts a random number by using a public key of the sending end, and sends the encrypted random number to the sending end. The sending end may use its private key to decrypt the encrypted random number to obtain the random number. The random number may be used as a key in the set of initial keys. The M initial keys can be established in both the sending end and the receiving end by repeating the above process M times.

Alternatively, by using a first random number exchanged between the receiving end and the sending end as a key and transmitting M random numbers by using the key, the M initial keys can be established in both the sending end and the receiving end.

Alternatively, multiple initial keys of the set of initial keys may be initial key groups established through an asymmetric public encryption key system. For example, the receiving end encrypts a first random number using a public key of the sending end, and sends the encrypted first random number to the sending end. The sending end may use its private key to decrypt the encrypted first random number to obtain the first random number. Similarly, the receiving end encrypts a second random number using the public key of the sending end, and sends the encrypted second random number to the sending end. The sending end may use its private key to decrypt the encrypted second random number to obtain the second random number. An exclusive or operation may be performed on the first random number and the second random number to obtain a third random number. The third random number may be used as a key of the set of initial keys. The M initial keys can be established by repeating the above process M times.

Alternatively, to reduce the computational complexity of a public key system, a third random number obtained by the receiving end and the sending end is used as a key. By using the key to transmit M random numbers, the M initial keys can be established in both the sending end and the receiving end.

The method of establishing the set of initial keys may be determined during the initialization of the encryption system or adjusted during business execution so as to increase the randomness of the keys of the set of initial keys and improve the security of the set of initial keys. The specific method used to establish the set of initial keys is not limited by the present disclosure.

In an exemplary embodiment, the encryption method further includes: updating the set of initial keys according to a third preset rule. The third preset rule may be set on a basis of the specific conversation period, the amount of data transmitted during the conversation, etc. The set of initial keys may be updated after the end of the previous conversation and before the start of the next conversation. Alternatively, the set of initial keys may be updated when the amount of data transmitted reaches a preset threshold.

For example, the set of initial keys established through an asymmetric public encryption key system may be updated at any time or periodically, which improves the security of the encryption system. The update period of the set of initial keys may be one conversation period or a preset duration. Updating the set of initial keys at any time or periodically can effectively prevent the initial keys from being exhausted and improve the security of the key system.

The first preset rule is preestablished by the encryption system. The receiving end and the sending end use the same preset rule. Selecting the first key from the set of initial keys according to the first preset rule can improve the randomness of the first key, thereby improving the security of the encryption system. Each time the sending end sends the encryption key, it selects the first key from the set of initial keys according to the first preset rule and encrypts the encryption key. In an exemplary embodiment, the first preset rule is that the number of the first key is the remainder of division of the number of the encryption key by $M$. In another exemplary embodiment, the receiving end and the sending end are set with synchronized clocks. The first preset rule may be that the number of the first key is a function of the current clock.

During each data transmission, a first key is selected from the set of initial keys according to the first preset rule, and the first key selected each time is different. Even if the set of initial keys is leaked, the cracker cannot determine which key in the set of initial keys is used for encryption in this data transmission, thereby improving the ability against leakage.

Step S42: An encryption key is encrypted on a basis of the first key to obtain a key ciphertext, where the encryption key is used for encrypting data to be transmitted.

Before sending data to the receiving end, the sending end needs to first send the encryption key used for this data transmission to the receiving end. In this way, after the sending end encrypts the data to be transmitted by using the encryption key and sends the encrypted data to the receiving end, the receiving end can use the same encryption key to decrypt the encrypted data and obtain the data to be transmitted. To ensure the security of the encryption key, the first key is used for encrypting the encryption key when sending the encryption key. The first key is selected from multiple keys of the set of initial keys according to the first preset rule.

In a case where the sending end and the receiving end use the same set of initial keys and the same first preset rule, it can be ensured that before each data transmission, the sending end selects an initial key to encrypt the encryption key, and the receiving end can also select the same initial key as the sending end to decrypt the encrypted key ciphertext to obtain the encryption key, thereby ensuring the success of data transmission and the confidentiality of the selected initial key. Cracking the key ciphertext requires the first key, the set of initial keys, the first preset rule, and which time of selection result where the current first key is selected. Apparently, using this encryption method can greatly improve the security of the encryption key and thus ensure the security of the transmitted data.

Step S43: The key ciphertext is sent to the receiving end. Before sending the data, the sending end determines the encryption key used in this data transmission. The encryption key is encrypted on a basis of the first key. The sending end sends the encrypted key ciphertext to the receiving end. The receiving end decrypts the key ciphertext, and may determine the encryption key used by the data to be transmitted.

Step S44: The data to be transmitted is encrypted by using the encryption key, and an encrypted data ciphertext is sent to the receiving end.

The sending end encrypts the data to be transmitted by using the encryption key and sends the encrypted data ciphertext to the receiving end after the sending end and the receiving end determine the encryption key used in this data transmission in step S43.

In this embodiment, the data is encrypted by using the encryption key. The encryption key is encrypted on a basis of the first key and the key ciphertext is obtained. The key ciphertext is sent to the receiving end before the data is transmitted. The set of initial keys and the first preset rule do not need to be transmitted. Even if the key ciphertext is intercepted, the cracker does not know which one of multiple initial keys is used in this transmission because the cracker is not able to know the initial keys, thereby ensuring the security of the encryption key which determines the security of the data.

In an exemplary embodiment, the encryption method further includes: selecting a second key according to a second preset rule.

In step S42, encrypting the encryption key on a basis of the first key to obtain the key ciphertext includes: encrypting the encryption key by using the first key and the second key to obtain the key ciphertext.

The second key is selected according to the second preset rule and may be selected from the set of initial keys. The second key is different from the first key through setting the second preset rule different from the first preset rule. For example, the second preset rule is that the second key is selected from the set of initial keys, and the number of the second key is the remainder of division of the sum of 1 and the number of the encryption key divided by *M*. Alternatively, the receiving end and the sending end are set with synchronized clocks, and the second preset rule is that the number of the second key is a function of the current clock, thereby ensuring that the key selected from the set of initial keys according to the first preset rule is different from the key selected from the set of initial keys according to the second rule. Alternatively, A key different from the keys of the set of initial keys may be selected as the second key.

The security of the encryption key is further improved through encrypting the encryption key by using the first key and the second key simultaneously. If the eavesdropper eavesdrops on the key ciphertext and in the case where both the first key and the second key are selected from the set of initial keys, the eavesdropper needs to know the set of initial keys, the first preset rule, the second preset rule and current number of transmissions to crack the key ciphertext. In the case where the second key is not selected from the set of initial keys, the difficulty of cracking the key ciphertext is further increased. Therefore, encrypting the encryption key by using the first key and the second key can effectively increase the difficulty of cracking the key ciphertext and ensure the security of the encryption key.

In an exemplary embodiment, selecting the second key according to the second preset rule includes:

selecting the second key from the set of initial keys according to the second preset rule; or
selecting an encryption key used in a previous data transmission as the second key.

For example, when sending data to the receiving end for the first time, the sending end may select the first key from the set of initial keys according to the first preset rule and select the second key from the set of initial keys according to the second preset rule, encrypt the encryption key by using the first key and the second key, which increases the difficulty of cracking and improves the security of the encryption key. When the transmission of data to the receiving end is not the first time of transmission, the sending end may select the encryption key used in the previous data transmission as the second key, and encrypt the encryption key used in the current data transmission by using the first key and the second key, which achieves dynamic encryption and reduces the quantity of keys in the set of initial keys.

The sending end determines the encryption key that is used for encrypting the data to be transmitted. Therefore, before sending the encrypted data, the sending end needs to first send the encryption key used in the current transmission to the receiving end, so that the receiving end can decrypt the encrypted data by using the encryption key after receiving the encrypted data to obtain the data of the current transmission.

To prevent the data from being illegally eavesdropped on and cracked, the security of the encryption key needs to be ensured. In this embodiment, the encryption key is encrypted by using the first key and the second key. The first key and the second key may both be selected from the set of initial keys according to different preset rules. Because the preset rules are preset in advance and are not transmitted, even if the set of initial keys is leaked, the cracker cannot crack the key ciphertext due to in capable of determining the first key and the second key selected by the sending end in each data transmission, thereby improving the security of the encryption key.

In an exemplary embodiment, the encrypting the encryption key by using the first key and the second key to obtain the key ciphertext includes:

encrypting the encryption key according to the first key by using a first encryption algorithm to obtain a first key ciphertext;
encrypting the first key ciphertext according to the second key by using a second encryption algorithm to obtain the key ciphertext.

The first encryption algorithm may be any encryption algorithm, for example, SM4 algorithm (a block cipher algorithm), or AES algorithm (advanced encryption standard, which is an alternative to DES algorithm and one of the most popular symmetric encryption algorithms nowadays), etc.

The sending end may perform a second encryption on the first key ciphertext encrypted by the first key. If the encryption key is transmitted for the first time, the second key used for the second encryption is selected from the set of initial keys according to the second preset rule. The second encryption algorithm may be any encryption algorithm, such as SM4 algorithm or AES algorithm. If the transmission of encryption key is not the first time of transmission, the second key may also be the encryption key for the previous transmission.

The first key ciphertext is encrypted for the second time by using the second key and the second encryption algorithm to obtain a second key ciphertext, and the second key ciphertext is used as the key ciphertext to be transmitted.

The encrypted encryption key is sent to the receiving end. The data to be transmitted is encrypted by using the encryption key, and the encrypted data is sent to the receiving end. The receiving end may decrypt the encrypted data by using the encryption key obtained from the sending end to obtain the data, which achieves secure data transmission.

In an exemplary embodiment, the encryption key is a quantum true random number.

If the encryption key used in data transmissions is fixed, it is possible to crack the encryption key through techniques such as brute force calculation, cryptographic mathematical analysis, and statistical analysis when the encryption machine or decryption machine leaks.

The quantum true random number is used as the encryption key, and any encryption key is used only once, destroyed after use, and never repeated. Different quantum true random numbers are used as encryption keys for different data transmissions, achieving a one-time-pad effect. The quantum true random number is generated by the sending end, which avoids the increased management cost caused by managing a large number of keys simultaneously at both the sending end and receiving end, as well as the risk of leaking a large number of keys.

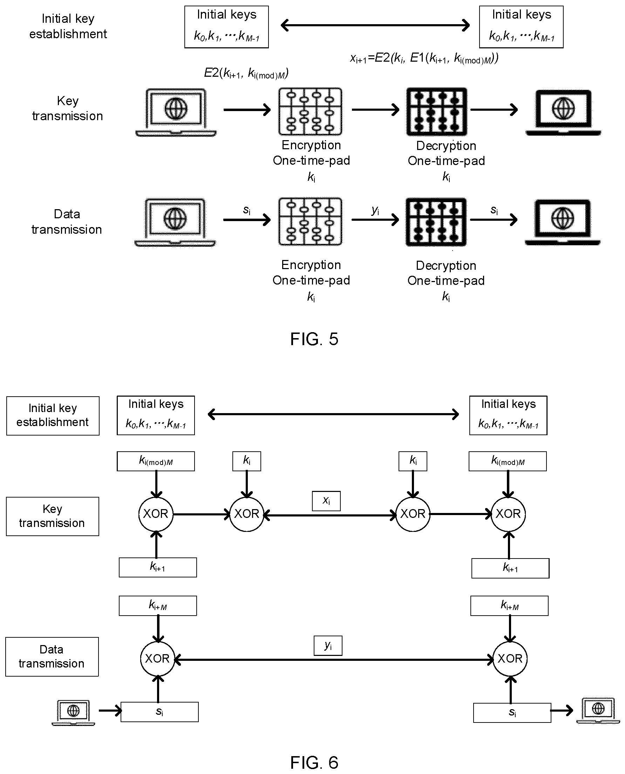

FIG. 5 is a schematic diagram of an encryption system according to an exemplary embodiment. Referring to FIG. 5, the set of initial keys is established in the sending end and the receiving end, and includes multiple initial keys. The multiple initial keys may be $k_0$, $k_1...k_{m-1}$ and the quantity of the initial keys may be M. The first preset rule is modular operation, and the initial key for each data transmission is selected by calculating the remainder through modular operation. The first key is represented as $k_{i(mod)M}$, the encryption key used for the current data transmission is $k_{i+1}$, the encryption key used for the previous data transmission is $k_i$. When sending the encryption key, the sending end first encrypts the current encryption key $k_{i+1}$ by using $k_{i(mod)M}$ and the first encryption algorithm $E1$ to obtain the first key ciphertext represented as $E1$ $(k_{i+1}, k_{i(mod)M})$, and then encrypts the first key ciphertext by using the encryption key used for the previous data transmission and the second encryption algorithm $E2$ to obtain the second key ciphertext represented as $x_{i+1} = E2(k_i, E1 (k_{i+1}, k_{i(mod)M}))$. $E1$ and $E2$ are encryption algorithms, and may be the same or different.

Taking M=2 as an example and assuming that the encryption algorithms $E1$ and $E2$ are simple exclusive-or operations, the set of initial keys only includes two initial keys because M=2, and the two initial keys are $k_0$ and $k_1$. It is assumed that the encryption keys used for the data transmissions sequentially are $k_2$, $k_3...k_n$. If $k_2$ is leaked or cracked, the next key $k_3$ must be cracked simultaneously to determine the unique solution for $k_0$ and $k_1$. As shown below, the following two equations can uniquely determine $k_0$ and $k_1$.

$$x_2 = (k_2 \oplus k_0) \oplus k_1$$

$$x_3 = (k_3 \oplus k_1) \oplus k_2$$

If $k_2$ is leaked or cracked, $k_3$ is not cracked, and $k_4$ is cracked, $k_0$ and $k_1$ still cannot be uniquely determined, even with infinite computing resources. As shown below, the following three equations cannot uniquely determine $k_0$ and $k_1$, as two of the three equations are equivalent, but there are three unknowns in the two equations, which makes it theoretically impossible to crack the keys of the entire system.

$$x_2 = (k_2 \oplus k_0) \oplus k_1$$

$$x_3 = (k_3 \oplus k_1) \oplus k_2$$

$$x_4 = (k_4 \oplus k_1) \oplus k_3$$

It can be seen that only by continuously determining the encryption keys used in the data transmissions and knowing the specific encryption algorithms, can the set of initial keys be cracked. As long as any encryption key used in multiple data transmissions is not cracked or leaked, the security of the key and data can be ensured. Through the above embodiment, the key ciphertext is the encryption key encrypted twice. During the data transmission, both the encryption key and the data are encrypted using a one-time-pad method. Even if a key $k_i$ used in a data transmission is leaked, the updated key $k_{i+1}$ cannot be leaked because it is encrypted by $k_{i(mod)M}$. If the quantity of the initial keys is M, it is necessary to crack M continuous keys before the entire system can be cracked. The encryption method provided by the present disclosure can effectively improve the security of the encryption key.

In an exemplary embodiment, an encryption operation of encrypting the encryption key is an exclusive-or operation.

The operation delay of the grouping symmetric cryptography algorithm is relatively short. But in some businesses such as the real-time control, the sensitivity of the system to delay may even exceed the operation delay of the grouping symmetric cryptographic algorithm. In this case, the encryption operation needs to be simplified to the exclusive-or operation with zero delay.

FIG. 6 is a schematic diagram of a real-time encryption system using quantum random numbers according to an exemplary embodiment. Referring to FIG. 6, the real-time encryption system includes three parts: an initial key establishment module, a one-time-pad key real-time transmission module, and a one-time-pad data real-time transmission module. The encryption algorithms may be standard symmetric grouping algorithms. As mentioned above, some real-time control systems cannot even accept the delay caused by the standard symmetric grouping algorithms. In order to reduce the delay of data processing, for encryption and decryption, the symmetric grouping algorithm may be replaced with the exclusive-or operation with zero delay. After the initial keys are established, the key and data synchronously begin with one-time pad transmission, using quantum random numbers as the keys. This cryptosystem can achieve one-time-pad encryption transmission with zero delay. This cryptosystem is not only able to resist key leakage (one-time-pad), but also has cryptographic security against brute force cracking.

It should be noted that the computation time of the asymmetric public encryption key system is significantly higher than that of the grouping symmetric cryptography algorithm. If the asymmetric public encryption key system is used to establish the set of initial keys, the establishment of the set of initial keys needs to be a part of system initialization, rather than to be a part of real-time communication. In this way, the delay in business processes can be effectively reduced.

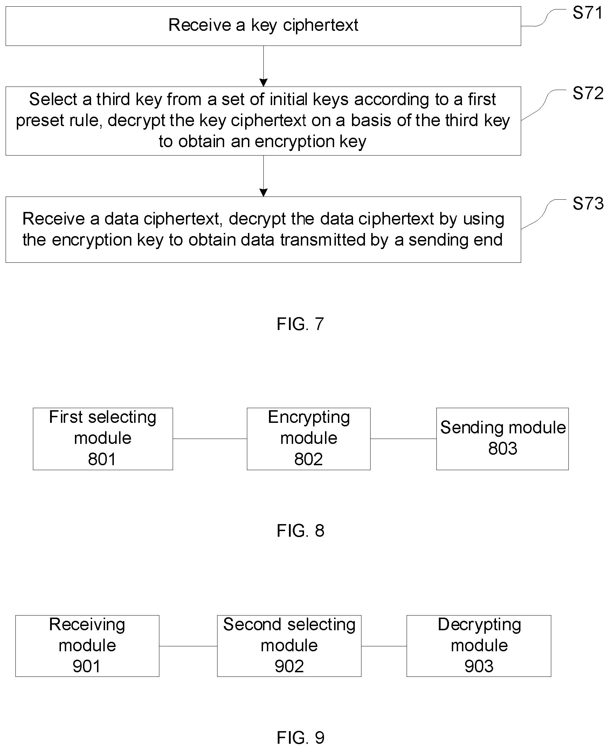

FIG. 7 is a flowchart of a decryption method according to an exemplary embodiment. Referring to FIG. 7, the decryption method is applied to a receiving end, and includes:

> Step S71: A key ciphertext is received. A sending end encrypts an encryption key to obtain the key ciphertext.
> Step S72: A third key is selected from a set of initial keys according to a first preset rule. The key ciphertext is decrypted on a basis of the third key to obtain the encryption key.

Due to the same set of initial keys and the same first preset rule for both the sending end and the receiving end, the receiving end can select the third key that is the same as the first key from the local set of initial keys. Corresponding to the sending end, the receiving end decrypts the key ciphertext on a basis of the third key and obtains the encryption key.

Step S73: A data ciphertext is received. The data ciphertext is decrypted by using the encryption key to obtain data transmitted by the sending end. The data ciphertext sent by the sending end may be decrypted by using the encryption key.

The third key is selected from the set of initial keys according to a preset rule by the receiving end. The set of initial keys is preestablished. During the data transmission, the set of initial keys does not need to be transmitted over network, which avoids the initial keys from being leaked, thereby ensuring the security of the data transmission.

In an exemplary embodiment, the decryption method further includes:
selecting a fourth key according to a second preset rule.

The decrypting the key ciphertext on a basis of the third key to obtain an encryption key includes:
decrypting the key ciphertext by using the third key and the fourth key to obtain the encryption key.

Corresponding to the encryption method of the sending end, if the sending end encrypts the encryption key by using the first key and the second key, the receiving end needs to select the third key and the fourth key according to the same preset rules after receiving the key ciphertext. Only when the third key is the same as the first key and the fourth key is the same as the second key, the key ciphertext can be decrypted.

In an exemplary embodiment, decrypting the key ciphertext by using the third key and a fourth key to obtain the encryption key includes:

> decrypting the key ciphertext by using the fourth key to obtain a first key ciphertext; and
> decrypting the first key ciphertext by using the third key to obtain the encryption key.

The decryption process at the receiving end is the opposite of the encryption process at the sending end, but the encryption algorithm and the decryption algorithm are consistent and preset. Therefore, when the encryption method and the decryption method provided by the present disclosure are used, even if the first key and the second key are cracked, it is necessary to know the encryption algorithm used by the sending end to decrypt the key ciphertext, which has good ability against cracking.

FIG. 8 is a block diagram of an encryption apparatus according to an exemplary embodiment. Referring to FIG. 8, the encryption apparatus is applied to a sending end, and includes a first selecting module 801, an encrypting module 802, and a sending module 803.

The first selecting module 801 is configured to select a first key from a set of initial keys according to a first preset rule.

The encrypting module 802 is configured to encrypt an encryption key on a basis of the first key to obtain a key ciphertext, and further configured to encrypt data to be transmitted by using the encryption key.

The sending module 803 is configured to send the key ciphertext to a receiving end, and further configured to send an encrypted data ciphertext to the receiving end.

In an exemplary embodiment, the first selecting module 801 is further configured to select a second key according to a second preset rule.

The encrypting module 802 is further configured to encrypt the encryption key by using the first key and the second key to and obtain the key ciphertext.

In an exemplary embodiment, the encrypting module 802 is further configured to encrypt the encryption key according to the first key by using a first encryption algorithm to obtain a first key ciphertext. The encrypting module 802 is further configured to encrypt the first key ciphertext according to the second key by using a second encryption algorithm to obtain the key ciphertext.

FIG. 9 is a block diagram of a decryption apparatus according to an exemplary embodiment. Referring to FIG. 9, the decryption apparatus is applied to the receiving end, and includes a receiving module 901, a second selecting module 902, and a decrypting module 903.

The receiving module 901 is configured to receive a key ciphertext and a data ciphertext.

The second selecting module 902 is configured to select a third key from a set of initial keys according to a first preset rule.

The decrypting module 904 is configured to decrypt the key ciphertext on a basis of the third key to obtain an encryption key, and further configured to decrypt the data ciphertext by using the encryption key.

In an exemplary embodiment, the second selecting module is further configured to selecting a fourth key according to the second preset rule.

The decrypting module 904 is further configured to decrypt the key ciphertext by using the third key and the fourth key to obtain the encryption key.

In an exemplary embodiment, the decrypting module 904 is further configured to decrypt the key ciphertext by using the fourth key to obtain a first key ciphertext, and decrypt the first key ciphertext by using the third key to obtain the encryption key.

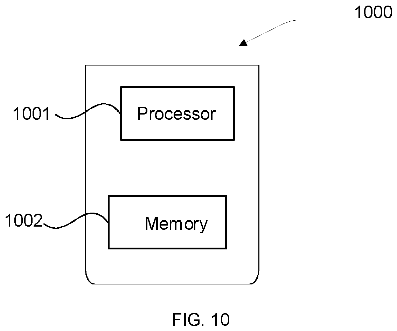

FIG. 10 is a block diagram of a computer device 1000 for encrypting and decrypting according to an exemplary embodiment. For example, the computer device 1000 may be provided as a server. Referring to FIG. 10, the computer device 1000 comprises a processor 1001. One or more processors may be provided according to actual needs. The computer device 1000 further comprises a memory 1002 configured to store instructions such as application programs, which are executable by the processor 1001. One or more memories may be provided according to actual needs. There may be one or more application programs stored in the memory. The processor 1001 is configured to execute instructions to perform the above encryption method or decryption method.

It may be understood by those skilled in the art that the embodiments of the present disclosure may be provided as methods, apparatuses (devices), or computer program products. Therefore, the present disclosure may be in the form of an hardware only embodiment, a software only embodiment, or an embodiment combining software and hardware. Moreover, the present disclosure may be in the form of a computer program product implemented on one or more computer-usable storage media containing computer-usable program codes. The computer storage media comprise volatile and nonvolatile media, removable and non-removable media implemented in any method or technology for storing information (for example computer-readable instructions, data structures, program modules, or other data), including but not limited to RAMs, ROMs, EEPROMs, flash memories or other memories, CD-ROMs, digital versatile disks (DVD) or other optical disk storages, magnetic cartridges, magnetic tapes, magnetic disk storages or other magnetic storage devices, or any other media that may be used to store desired information and may be accessed by a computer. In addition, as known to a person of ordinary skill in the art, the communication media usually contains computer-readable instructions, data structures, program modules, or other data in modulated data signals such as carriers or other transmission mechanisms, and may include any information delivery media.

The present disclosure has been described with reference to flowcharts and/or block diagrams of the methods, apparatuses (devices) and computer program products according to embodiments of the present disclosure. It should be understood that each flow and/or block in the flowchart and/or block diagram and the combination of flows and/or blocks in the flowchart and/or block diagram may be implemented by computer program instructions. These computer program instructions may be provided to general-purpose computers, special-purpose computers, embedded processors, or processors of other programmable data processing devices to produce a machine, so that the instructions executed by the computers or the processors of other programmable data processing devices produce an apparatus that realizes the functions specified in one or more flows in the flowchart and/or one or more blocks in the block diagram.

These computer program instructions may be stored in computer-readable memories that can guide computers or other programmable data processing devices to work in a specific manner, so that the instructions stored in the computer-readable memories produce manufacturing article including the instruction apparatus. The instruction apparatus implements the functions specified in one or more flows in the flowchart and/or one or more blocks in the block diagram.

These computer program instructions may be loaded on computers or other programmable data processing devices, so that a series of operating steps are executed on the computers or other programmable devices to produce computer-implemented processing. Thus, the instructions executed on the computers or other programmable devices provide steps for implementing the functions specified in one or more flows in the flowchart and/or one or more blocks in the block diagram.

Herein, terms "comprise," "include" and variants thereof are intended to cover non-exclusive inclusion, so that an article or a device including a series of elements includes not only these elements, but also other elements not explicitly listed, or further includes inherent elements of the article or the device. Without further limitation, an element as defined by a statement "including a..." is not exclusive of additional identical elements further existed in the article or the device that includes the element.

Although the preferred embodiments of the present disclosure have been described, those skilled in the art can make additional changes and modifications to these embodiments once they learn the basic creative concept. Therefore, the appended claims are intended to be interpreted as comprising the preferred embodiments and all changes and modifications falling into the scope of the present disclosure.

Apparently, those skilled in the art can make various modifications and variations to the present disclosure without departing from the spirit and scope of the present disclosure. In this way, if these modifications and variations of the present disclosure fall into the scope of the claims of the present disclosure and their equivalents, the present disclosure is intended to encompass these modifications and variations

**Industrial Applicability**

In the present disclosure, the sending end selects the first key from the set of initial keys according to the first preset rule, encrypts the encryption key on a basis of the first key to obtain the key ciphertext, sends the key ciphertext to the receiving end, encrypts the data to be transmitted by using the encryption key, and sends the encrypted data ciphertext to the receiving end. Every time encrypted data is sent to the receiving end, a different encryption key is used to perform encryption, and the encryption key is encrypted on a basis of the first key, where the first key is selected from the set of initial keys according to the first preset rule, such that the security of key transmission is ensured. In this way, even if the used encryption key is cracked, due to the first key being selected from the set of initial keys according to the first preset rule, the security of the encryption key used subsequently can be ensured, and the security of an encryption system against technical cracking and against key leakage is improved.

**Claims**

1. An encryption method, applied to a sending end, and comprising:

    selecting a first key from a set of initial keys according to a first preset rule;
    encrypting an encryption key on a basis of the first key to obtain a key ciphertext, wherein the encryption key is used for encrypting data to be transmitted;
    sending the key ciphertext to a receiving end; and
    encrypting the data to be transmitted by using the encryption key, and sending an encrypted data ciphertext to the receiving end.

2. The encryption method of claim 1, further comprising:

    selecting a second key according to a second preset rule;

    wherein the encrypting an encryption key on a basis of the first key to obtain a key ciphertext comprises:
    encrypting the encryption key by using the first key and the second key, to obtain the key ciphertext.

3. The encryption method of claim 2, wherein the encrypting the encryption key by using the first key and the second key to obtain the key ciphertext comprises:

    encrypting the encryption key according to the first key by using a first encryption algorithm to obtain a first key ciphertext; and
    encrypting the first key ciphertext according to the second key by using a second encryption algorithm to obtain the key ciphertext.

4. The encryption method of claim 1, wherein selecting a second key according to a second preset rule comprises:

    selecting the second key from the set of initial keys according to the second preset rule; or
    selecting an encryption key used in a previous data transmission as the second key.

5. The encryption method of any one of claims 1 to 4, wherein the encryption key is a quantum true random number.

6. The encryption method of claim 1, further comprising:
    updating the set of initial keys according to a third preset rule.

7. The encryption method of claim 1, wherein an encryption operation of encrypting the encryption key is an exclusive-or operation.

8. A decryption method, applied to a receiving end, and comprising:

    receiving a key ciphertext;
    selecting a third key from a set of initial keys according to a first preset rule, decrypting the key ciphertext on a basis of the third key to obtain an encryption key; and
    receiving a data ciphertext, decrypting the data ciphertext by using the encryption key to obtain data transmitted by a sending end.

9. The decryption method of claim 8, further comprising:

    selecting a fourth key according to a second preset rule;

wherein the decrypting the key ciphertext on a basis of the third key to obtain an encryption key comprises:

decrypting the key ciphertext by using the third key and the fourth key to obtain the encryption key.

10. The decryption method of claim 8, wherein decrypting the key ciphertext by using the third key and a fourth key to obtain the encryption key comprises:

decrypting the key ciphertext by using the fourth key to obtain a first key ciphertext; and decrypting the first key ciphertext by using the third key to obtain the encryption key.

11. An encryption apparatus, applied to a sending end, and comprising:

a first selecting module, configured to select a first key from a set of initial keys according to a first preset rule; an encrypting module, configured to encrypt an encryption key on a basis of the first key to obtain a key ciphertext, and further configured to encrypt data to be transmitted by using the encryption key; and a sending module, configured to send the key ciphertext to a receiving end, and further configured to send an encrypted data ciphertext to the receiving end.

12. A decryption apparatus, applied to a receiving end, and comprising:

a receiving module, configured to receive a key ciphertext and a data ciphertext; a second selecting module, configured to select a third key from a set of initial keys according to a first preset rule; and a decrypting module, configured to decrypt the key ciphertext on a basis of the third key to obtain an encryption key, and further configured to decrypt the data ciphertext by using the encryption key.

13. An encryption apparatus, comprising:

a processor; and a memory configured to store instructions executable by the processor; wherein the processor is configured to perform the encryption method of any one of claims 1 to 7.

14. A decryption apparatus, comprising:

a processor; and a memory configured to store instructions executable by the processor; wherein the processor is configured to perform the decryption method of any one of claims 8 to 10.

15. A computer-readable storage medium, storing a computer program, wherein when executed, the computer program implements the encryption method of any one of claims 1 to 7, or the decryption method of any one of claims 8 to 10.

Pre stored key pool
$k_1 k_2 k_3 ...$

Encryption
One-time-pad
$k_i$

Decryption
One-time-pad
$k_i$

Pre stored key pool
$k_1 k_2 k_3 ...$

FIG. 1

Initial key
establishment

Root key
$k_{root}$

Root key
$k_{root}$

Key
transmission

Encryption
$k_{root}$

Decryption
$k_{root}$

Data
transmission

Encryption key
updating
$k_i$

Decryption key
updating
$k_i$

FIG. 2

Initial key
establishment

Root key
$k_0$

$x_{i+1}=E(k_i,\ k_{i+1})$

Root key
$k_0$

Key
transmission

$k_{i+1}$

$x_{i+1}$

$k_{i+1}$

Encryption
One-time-pad
$k_i$

Decryption
One-time-pad
$k_i$

Data
transmission

$s_i$

$y_i$

$s_i$

Encryption key
updating
$k_{i+1}$

Decryption key
updating
$k_{i+1}$

FIG. 3

Select a first key from a set of initial keys according to a first preset rule
S41

Encrypt an encryption key on a basis of the first key to obtain a key ciphertext, where the encryption key is used for encrypting data to be transmitted
S42

Send the key ciphertext to a receiving end
S43

Encrypt the data to be transmitted by using the encryption key, and send an encrypted data ciphertext to the receiving end
S44

FIG. 4

Initial key establishment

Initial keys

$k_0, k_1, \cdots, k_{M-1}$

Initial keys

$k_0, k_1, \cdots, k_{M-1}$

$x_{i+1} = E2(k_i, \; E1(k_{i+1}, \; k_{i(mod)M}))$

$E2(k_{i+1}, \; k_{i(mod)M})$

Key transmission

Encryption
One-time-pad
$k_i$

Decryption
One-time-pad
$k_i$

Data transmission

$s_i$     $y_i$     $s_i$

Encryption
One-time-pad
$k_i$

Decryption
One-time-pad
$k_i$

## FIG. 5

Initial key establishment

Initial keys

$k_0, k_1, \cdots, k_{M-1}$

Initial keys

$k_0, k_1, \cdots, k_{M-1}$

$k_{i(mod)M}$    $k_i$      $k_i$    $k_{i(mod)M}$

Key transmission

XOR    XOR   $x_i$   XOR    XOR

$k_{i+1}$           $k_{i+1}$

$k_{i+M}$           $k_{i+M}$

Data transmission

XOR     $y_i$     XOR

$s_i$           $s_i$

## FIG. 6

Receive a key ciphertext — S71

Select a third key from a set of initial keys according to a first preset rule, decrypt the key ciphertext on a basis of the third key to obtain an encryption key — S72

Receive a data ciphertext, decrypt the data ciphertext by using the encryption key to obtain data transmitted by a sending end — S73

FIG. 7

First selecting module 801 — Encrypting module 802 — Sending module 803

FIG. 8

Receiving module 901 — Second selecting module 902 — Decrypting module 903

FIG. 9

1000

1001 Processor

1002 Memory

FIG. 10

## INTERNATIONAL SEARCH REPORT

| International application No. |
|---|
| **PCT/CN2022/129032** |

**A. CLASSIFICATION OF SUBJECT MATTER**

H04L 9/08(2006.01)i

According to International Patent Classification (IPC) or to both national classification and IPC

**B. FIELDS SEARCHED**

Minimum documentation searched (classification system followed by classification symbols)

H04L9/-

Documentation searched other than minimum documentation to the extent that such documents are included in the fields searched

Electronic data base consulted during the international search (name of data base and, where practicable, search terms used)

CNABS; CNTXT; CNKI; CJFD: 加密, 解密, 密钥, 集, 选; DWPI; WPABS; EPTXT; WOTXT; USTXT; IEEE: key, encrypt, decrypt, set

**C. DOCUMENTS CONSIDERED TO BE RELEVANT**

| Category* | Citation of document, with indication, where appropriate, of the relevant passages | Relevant to claim No. |
|---|---|---|
| PX | CN 114884716 A (SHRONG ENERGY TECHNOLOGY CO., LTD.) 09 August 2022 (2022-08-09)<br>claims 1-15 | 1-15 |
| X | CN 112653705 A (AGRICULTURAL BANK OF CHINA) 13 April 2021 (2021-04-13)<br>claims 1-10 | 1-15 |
| X | CN 107770127 A (BEIJING JINGDONG SHANGKE INFORMATION TECHNOLOGY CO., LTD. et al.) 06 March 2018 (2018-03-06)<br>claims 1-8 | 1-15 |
| X | CN 112272174 A (BEIJING HAITAI FANGYUAN HIGH TECHNOLOGY CO., LTD.) 26 January 2021 (2021-01-26)<br>claims 1-10 | 1-15 |
| X | WO 2016048054 A2 (SAMSUNG ELECTRONICS CO., LTD.) 31 March 2016 (2016-03-31)<br>claims 1-10 | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 January 2023** | **28 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/129032**

| Patent document cited in search report | | | Publication date (day/month/year) | Patent family member(s) | | | Publication date (day/month/year) |
|---|---|---|---|---|---|---|---|
| CN | 114884716 | A | 09 August 2022 | None | | | |
| CN | 112653705 | A | 13 April 2021 | None | | | |
| CN | 107770127 | A | 06 March 2018 | None | | | |
| CN | 112272174 | A | 26 January 2021 | None | | | |
| WO | 2016048054 | A2 | 31 March 2016 | KR | 20160035999 | A | 01 April 2016 |
| | | | | WO | 2016048054 | A3 | 12 May 2016 |
| | | | | US | 2017208045 | A1 | 20 July 2017 |
| | | | | US | 10454904 | B2 | 22 October 2019 |

Form PCT/ISA/210 (patent family annex) (January 2015)

**REFERENCES CITED IN THE DESCRIPTION**

**Patent documents cited in the description**

- CN 202210458356